**Europäisches Patentamt**

**European Patent Office**

**Office européen des brevets**

(19)

(11) Veröffentlichungsnummer: **0 076 943**
A1

(12) # EUROPÄISCHE PATENTANMELDUNG

(21) Anmeldenummer: 82108721.0

(51) Int. Cl.³: **B 32 B 5/20**

(22) Anmeldetag: 21.09.82

(30) Priorität: 01.10.81 DE 8128714 U

(71) Anmelder: **RESOPAL WERK H. Römmler GmbH, Hans-Böckler-Strasse 4, D-6114 Gross-Umstadt (DE)**

(43) Veröffentlichungstag der Anmeldung: 20.04.83 Patentblatt 83/16

(72) Erfinder: **Griesdorn, Alfons, Dipl.-Ing., Mellbokusstrasse 21, D-6140 Bensheim-Auerbach (DE)**
Erfinder: **Holzer, Herbert, Dr. Dipl.-Chem., Wingertsweg 15, D-6114 Gross-Umstadt (DE)**
Erfinder: **Hunsicker, Hans-Günther, Angelstrasse 82 B, D-6112 Gross-Zimmern (DE)**

(84) Benannte Vertragsstaaten: **AT BE CH FR GB IT LI NL SE**

(74) Vertreter: **Kempe, Wolfgang, Dr. et al, c/o Brown, Boveri & Cie AG Postfach 351, D-6800 Mannheim 1 (DE)**

(54) Verbundelement sowie ein Verfahren zur Herstellung desselben.

(57) Die Erfindung bezieht sich auf ein Verbundelement (1) sowie auf ein Verfahren zur Herstellung desselben. Bei der Herstellung des erfindungsgemäßen Verbundelementes (1) werden zwei dekorative Schichtpreßstoffplatten (3 und 4) mittels einer Halterung in definiertem Abstand voneinander parallel und flächendeckend mit ihren Dekorseiten nach außen weisend, zueinander angeordnet. Die beiden dekorativen Schichtpreßstoffplatten (3 und 4) werden so gehaltert, daß zwischen ihnen ein Raum von vorgebbarer Höhe verbleibt. Anschließend wird dieser Raum zur Ausbildung des Trägers (2) der Verbundplatte (1) mit einem aushärtbaren Schaum vollständig ausgefüllt. Die Adhäsions-Kraft des verwendeten Schaumes ist so groß, daß die beiden dekorativen Schichtpreßstoffplatten (3 und 4) dauerhaft auch nach seiner Aushärtung mit ihm verbunden bleiben.

EP 0 076 943 A1

0076943

RESOPAL - WERK
H. Römmler GmbH
Mannheim                                    12. Juli 1982
Mp.-Nr. 618/81 EP                           ZPT/P1-Kr/Hr

## Verbundelement sowie ein Verfahren zur Herstellung desselben

Die Erfindung bezieht sich auf ein Verbundelement gemäß dem Oberbegriff des Patentanspruches 1 sowie auf ein Verfahren zur Herstellung desselben.

Solche Verbundelemente kommen bei der Möbelherstellung, dem Innnenausbau von Gebäuden sowie für die Wandverkleidung sowohl im Innen- als auch im Außenbereich zur Anwendung.

Die bis jetzt bekannten Verbundelemente weisen einen als Träger dienenden Kern auf. Die Oberfläche dieser Verbundelemente wird vorzugsweise durch dekorative Schichtpreßstoffplatten gebildet, die mit dem Träger verleimt sind. Als Träger werden bis jetzt Spanplatten, Tischlerplatten, Gipsfaserplatten oder Leichtbetonplatten verwendet. Die dekorativen Schichtpreßstoffplatten werden in Verleimpressen mit dem Trägermaterial verbunden. Die dekorativen Schichtpreßstoffplatten, die für die Herstellung der Oberflächen verwendet werden, sind im Bauwesen sowie bei der Möbelherstellung seit vielen Jahren
bekannt. Sie weisen eine glatte oder strukturierte Oberfläche auf, die kratzfest ist und deshalb für die Ausbildung der Deckschicht von Verbundelementen prädestiniert ist. Diese dekorativen Schichtpreßstoffplatten
können starken mechanischen und chemischen Beanspruchungen ausgesetzt werden. Hinzu kommt, daß diese dekorativen Schichtpreßstoffplatten praktisch mit jedem Dekor
und jeder beliebigen Farbe hergestellt werden können.
Sie bestehen aus einem Kern von mehreren Lagen Phenolharz getränktem Kraftpapier auf den ein Melaminharz getränkter, bedruckter oder farbiger Dekorbogen aufgelegt
ist, der die sichtbare Oberfläche darstellt. Zum Schutz
des Dekors kann noch ein dünnes harzreiches Überpresserpapier als oberste Schicht hinzukommen. Der so gebildete
Stapel wird bei einer Temperatur von 150 bis 200°C und
einem Druck von 70 bis 150 kp/qcm verpreßt.

Das Verleimen dieser dekorativen Schichtpreßstoffplatten
mit dem oben erwähnten Trägermaterial ist sehr zeitaufwendig und kostenintensiv. Ferner weisen solche Verbundelemente gewisse naturbedingte Nachteile auf. Zum einen
ist ihr Gewicht sehr hoch. Zum anderen weisen sie eine
nicht zu vernachlässigende Empfindlichkeit gegenüber der
Einwirkung von Wasser auf das Trägermaterial und die
Leimfugen auf.

Der Erfindung liegt deshalb die Aufgabe zugrunde, ein
leicht herstellbares und zugleich billiges Verbundelement zu schaffen, bei dem der Träger auch unter extremen
mechanischen und chemischen Einwirkungen dauerhaft mit
den Schichtpreßstoffplatten verbunden bleibt.
Ferner ist ein Verfahren anzugeben, mit dem die einfache
und kostengünstige Herstellung dieses Verbundelementes möglich ist.

Gelöst wird diese Aufgabe erfindungsgemäß durch die im kennzeichnenden Teil des Patentanspruches 1 offenbarten Merkmale.

Ein Verfahren zur Herstellung eines solchen Verbundelementes ist im kennzeichnenden Teil des Patentanspruches 9 offenbart.

Der Träger wird aus Polyurethanhartschaum hergestellt. Zu diesem Zweck werden wenigstens zwei dekorative Schichtpreßstoffplatten in einem definierten Abstand parallel und flächendeckend zueinander angeordnet. Anschließend wird in den freien Raum zwischen den Schichtpreßstoffplatten eine der später gewünschten Schaumdichte entsprechende Menge Polyurethangemisch eingefüllt. Dieses flüssige Gemisch besteht aus Polyol, Isocyanat, Treibmittel und Füllstoffen. Durch den Schäumvorgang wird eine sehr feste Verbindung zwischen dem Träger und den dekorativen Schichtpreßstoffplatten hergestellt. Die zusätzliche Verwendung von Leim für die Verbindung zwischen den dekorativen Schichtpreßstoffplatten und dem Träger ist hierbei nicht erforderlich. Die Adhäsions-Kraft des ausgehärteten Polyurethanhartschaumes ist so groß, daß durch sie eine dauerhafte Verbindung zwischen dem Träger und den dekorativen Schichtpreßstoffplatten hergestellt wird.

Der Träger des erfindungsgemäßen Verbundelements ist formstabil und kann gleichzeitig als Isoliermaterial gegen Wärme und Kälte verwendet werden. Durch die zusätzlich Beimischung eines Füllstoffes in den Polyurethanhartschaum kann dessen Formbeständigkeit und Stabilität weiter vergrößert werden. Als Füllstoffe kommen anorganische und organische Materialien in Frage. Es besteht die Möglichkeit industrielle Rest- und Abfallstoffe, die im Rahmen eines rohstoffeinsparenden Recyclings anfallen, als Füllstoffe zu verwenden. Diese Füllstoffe können auch dazu geeignet sein, die Schwerentflammbarkeit des Verbundelementes zu erhöhen. Durch eine spezielle Einstellung des Polyurethanhartschaumsystems läßt sich die Schwerentflammbarkeit des Verbundelementes weiter vergrößern. Als Füllstoffe für den Polyurethanhartschaum können auch feinkörnige, pulvrige Materialien verwendet werden. Insbesondere sind solche Stoffe vorteilhaft, die die Druckbelastbarkeit des Polyurethanhartschaumes erhöhen. Hierfür können Glas- oder Keramikfasern dem Polyurethanhartschaum beigemischt werden. Sie tragen ebenfalls zur Druckfestigkeit des Trägers bei.

Durch die Verwendung von Polyurethanhartschaum, der zusätzlich mit einem anorganischen und/oder organischen Füllstoff versehen ist kann ein Träger für das erfindungsgemäße Verbundelement hergestellt werden, der nur eine Dichte von 0,15 bis 0,4 kg/l hat. Damit können Verbundelemente in beliebiger Dicke hergestellt werden, deren Gewicht wesentlich geringer ist, als das der bisher bekannten Verbundelemente mit vergleichbarer Größe.

Da für die Herstellung des Trägers Polyurethanhartschaum verwendet wird, können Verbundelemente mit jeder beliebigen Form hergestellt werden.

Das erfindungsgemäße Verbundelement ist wasser- und wärmeunempfindlich, da für die Verbindung des Trägers mit den dekorativen Schichtpreßstoffplatten kein Leim verwendet wird. Der zusätzlich mit Füllstoffen versehene Polyurethanhartschaum ist nahezu druckunempfindlich, so daß das Verbundelement eine dauerhafte dimensionsstabilisierte Form aufweist. Neben den hervorragendenden wärme- und kältedämmenden Eigenschaften und der hohen Steifigkeit zeichnet sich das erfindungsgemäße Verbundelement durch ein sehr geringes Gewicht aus, das nur 25 bis 40% dessen beträgt, was Verbundelemente vergleichbarer Größe aufweisen, die mit den konventionellen Holzwerkstoffträgern hergestellt sind.

Die Erfindung wird nachfolgend anhand von Zeichnungen erläutert.

Es zeigen:

Fig. 1    ein als ebene Platte ausgebildetes Verbundelement,

Fig. 2    ein plattenförmiges Verbundelement mit abgerundeten Frontkanten,

Fig. 3    ein V-förmiges Verbundelement.

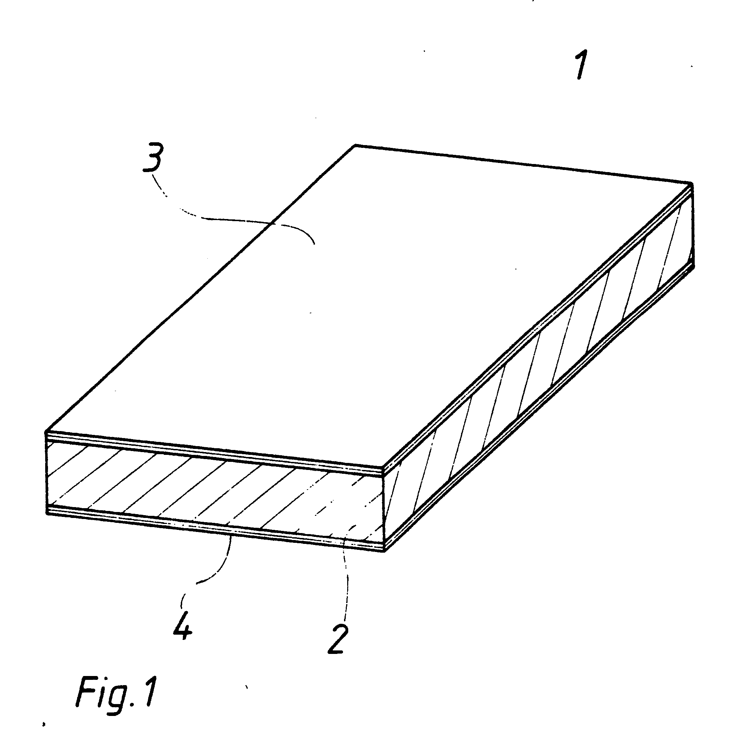

In Figur 1 ist ein Verbundelement 1 dargestellt, das als ebene Platte ausgebildet ist. Das Verbundelement 1 wird durch einen Träger 2 und zwei dekorative Schichtpreßstoffplatten 3 und 4 gebildet. Der Träger 2 ist auf seiner Ober- und Unterseite durch je eine der beiden dekorativen Schichtpreßstoffplatten 3 und 4 begrenzt. Die beiden dekorativen Schichtpreßstoffplatten 3 und 4 sind nach dem eingangs beschriebenen Verfahren hergestellt. Sie sind als ebene Platten ausgebildet. Ihre Oberfläche kann je nach Bedarf glatt oder strukturiert ausgebildet sein. Das ihre Oberfläche bildende Dekormuster ist ebenfalls frei wählbar. Für die Herstellung
des erfindungsgemäßen Verbundelementes werden die beiden
dekorativen Schichtpreßstoffplatten in einem vorgebbaren
Abstand parallel und flächendeckend zueinander angeordnet. Vorzugsweise werden die beiden dekorativen Schichtpreßtstoffplatten 3 und 4 hierfür in eine Haltevorrichtungen eingspannt. Anschließend wird in den freien Raum
zwischen den beiden dekorativen Schichtpreßstoffplatten
eine, der später gewünschten Schaumdichte entsprechende
Menge an flüssigem Polyurethangemisch eindosiert. Durch
die einsetzende Schaumbildung, den entstehenden Druck
und die Benetzung der Innenseiten der Platten wird ein
lösbarer Verbund zwischen den beiden, die äußere Begrenzung bildenden Schichtpreßstoffplatten 3 und 4 erzielt.
Während der Aushärtung bleibt der Schaum dimensionsstabil, so daß auch nach der Aushärtung der zwischen den
dekorativen Schichtpreßstoffplatten 3 und 4 befindliche
Raum vollständig ausgefüllt ist. Der Polyurethanhartschaum weist auch im ausgehärteten Zustand eine sehr
große Adhäsions-Kraft auf, so daß die beiden dekorativen
Schichtpreßstoffplatten 3 und 4 dauerhaft an den Träger
2 gebunden sind. Die Verwendung eines zusätzlichen Klebers zur Verbindung des Trägers 2 mit den beiden dekorativen Schichtpreßstoffplatten ist bei dem erfindungsgemäßen Verbundelement 1 nicht erforderlich.

Die Druckfestigkeit des Trägers 2 kann durch Zugabe
eines anorganischen und/oder organischen Füllstoffes
vergrößert werden. Vorzugsweise werden dem Polyurethanhartschaum industrielle Rest- und Abfallstoffe zugeführt. Es handelt sich hierbei um Stoffe, die im Rahmen
eines rohstoffeinsparenden Recyclingkonzepts anfallen.
Die Menge des Füllstoffes, die dem Polyurethanhartschaum
beigemischt wird, richtet sich nach der gewünschten Festigkeit des Trägers 2. Anstelle der Rest- oder Abfallstoffe kann auch ein feinkörniger, pulverförmiger Füllstoff dem Polyurethanhartschaum beigemischt werden. Glas- oder Keramikfasern sind ebenfalls als Füllstoffe geeignet.

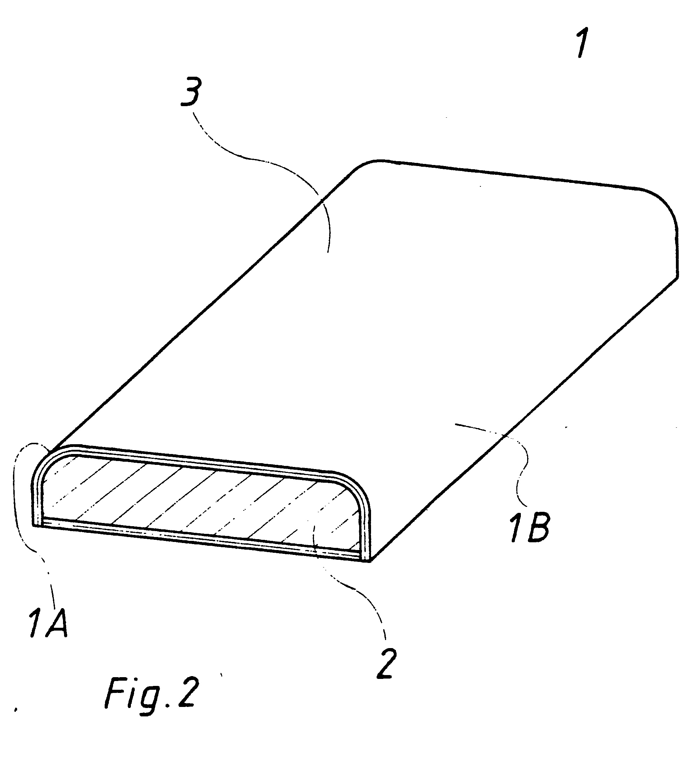

Figur 2 zeigt ein Verbundelement 1 das mit zwei abgerundeten Frontkanten 1A und 1B versehen ist. Für die Herstellung dieses Verbundelementes wird die erste Dekorschicht 3 so geformt, daß ihre Außenkontur einer Fläche entspricht, die auf zwei gegenüberliegenden Seiten jeweils eine abgerundete Kante aufweist. Die beiden Kanten sind nach der gleichen Seite abgerundet. Das Formen der dekorativen Schichtpreßstoffplatte 3 kann entweder bei deren Herstellung oder nachträglich durch Einwirkung von Wärme und Druck erzielt werden. Die dekorative Schichtpreßstoffplatte 3 wird nun so angeordnet, daß in den durch sie begrenzten wannenförmigen Raum eine entsprechende Menge an flüssigem Polyurethangemisch eindossiert werden kann. Der ausgefüllte Raum wird durch eine zweite dekorative Schichtpreßstoffplatte sofort nach dem Ausfüllen überdeckt. Die dekorative Schichtpreßstoffplatte 4 weist die gleiche Länge wie die dekorative Schichtpreßstoffplatte 3 auf. Die Breite der dekortiven Schichtpreßstoffplatte 4 ist so groß gewählt, daß ihre seitlichen Längskanten an die Längskanten der dekorativen Schichtpreßstoffplatte 3 angrenzen. Zur Erhöhung der Druckfestigkeit des Trägers 2 kann dem Polyurethanhartschaum auch bei dem hier gezeigten Ausführungsbeispiel ein anorganischer und/oder organischer Füllstoff beigemischt werden. Es kommen hierfür die gleichen Stoffe infrage, wie sie in der Beschreibung von Figur 1 erläutert sind.

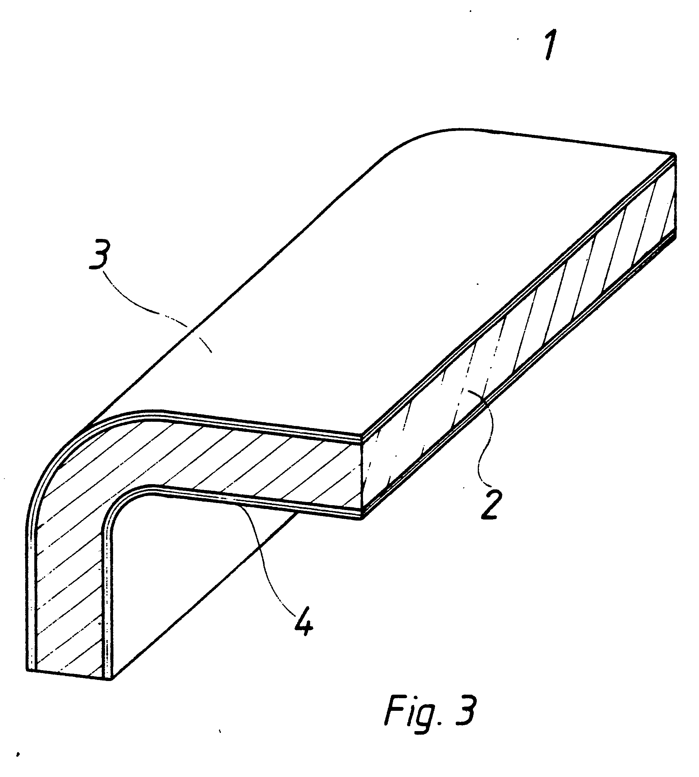

Figur 3 zeigt ein V-förmiges Verbundelement 1. Es weist einen Träger 2 aus Polyurethanhartschaum sowie zwei seine Oberflächen bildenden dekorativen Schichtpreßstoffplatten 3 und 4 auf. Dieses Verbundelement 1 ist beispielsweise zur Verkleidung von Kantenbereichen oder zum Überdecken von Winkeln geeignet. Die beiden dekorativen Schichtpreßstoffplatten 3 und 4 werden hierfür V-förmig gebogen. Dies kann bereits bei ihrer Herstellung erfolgen. Andererseits besteht die Möglichkeit bereits fertiggestellte dekorative Schichtpreßstoffplatten unter Einwirkung von Wärme und Druck nachzupressen. Die beiden dekorativen Schichtstoffpreßplatten 3 und 4 sind ebenfalls in der beschriebenen Art und Weise herge- stellt. Sie können auch bei diesem Ausführungsbeispiel mit einer glatten oder strukturierten Oberfläche versehen werden. Die dekorative Schichtpreßstoffplatte 3 ist in ihren Abmessungen geringfügig größer gewählt als die zweite dekorative Schichtpreßstoffplatte 4, da sie die äußere Deck- beziehungsweise Oberfläche des erfindungsgemäßen Verbundelementes 1 bildet. Die beiden dekorativen Schichtpreßstoffplatten 3 und 4 werden für die Herstellung des Verbundelementes 1 vorzugsweise unter Zuhilfenahme einer Halterung beziehungsweise einer Einspannvorrichtung in einem definierten Abstand parallel und flächendeckend zueinander angeordnet. Der Abstand zwischen den beiden dekorativen Schichtpreßstoffplatten 3 und 4 richtet sich nach der gewünschten Dicke des Verbundelementes 1.

Nachdem die beiden dekorativen Schichtpreßstoffplatten in der gewünschten Art und Weise angeordnet sind, wird in den zwischen ihnen verbleibenden Raum ein flüssiges Polyurethangemisch eindosiert. Nach dem Aushärten des Polyurethanhartschaumes ist auch dieses Verbundelement fertiggestellt. Zur Erhöhung der Druckfestigkeit des Verbundelementes, insbesondere seines Trägers 2, können dem Polyurethanhartschaum auch hierbei ein oder mehrere Füllstoffe beigemischt werden, die aus anorganischen und/oder orgnischen Materialien bestehen.

Das erfindungsgemäße Verbundelement beschränkt sich nicht nur auf die in den Figuren 1 bis 3 beschriebenen Ausführungsbeispiele. Insbesondere umfaßt die Erfindung alle Verbundelemente, deren Träger aus Polyurethanhartschaum hergestellt sind, und bei denen die Verbindung zwischen dem Träger und den dekorativen Schichtpreßstoffplatten ausschließlich durch die Adhäsions-Kraft des Polyurethanhartschaums erfolgt.

A n s p r ü c h e

1. Verbundelement (1) mit einem Träger (2) als Kern, dessen Oberfläche mindestens einseitig durch eine dekorative Schichtpreßstoffplatte (3, 4) gebildet ist, dadurch gekennzeichnet, daß der Träger (2) aus einem aushärtbaren Schaum gebildet ist, und daß die dekorativen Schichtpreßstoffplatten (3, 4) durch die Adhäsions-Kraft des Schaumes direkt und dauerhaft mit dem Träger (2) zu einer Einheit verbunden sind.

2. Verbundelement nach Anspruch 1, dadurch gekennzeichnet, daß der Träger (2) aus Polyurethanhartschaum hergestellt ist.

3. Verbundelement nach einem der Ansprüche 1 oder 2, dadurch gekennzeichnet, daß wenigstens zwei dekorative Schichtpreßstoffplatten (3, 4) in definiertem Abstand parallel und flächendecken zueinander angeordnet sind, und daß der freie Raum zwischen den beiden dekorativen Schichtpreßstoffplatten (3, 4) vollständig mit Polyurethanhartschaum ausgefüllt ist.

4. Verbundelement nach einem der Ansprüche 2 bis 3, dadurch gekennzeichnet, daß dem Polyurethanhartschaum ein anorganischer und/oder organischer Füllstoff (5) beigemischt ist.

5. Verbundelement nach einem der Ansprüche 2 bis 4, dadurch gekennzeichnet, daß dem Polyurethanhartschaum industrielle Rest- und Abfallstoffe als Füllstoffe beigemischt sind, die nach einem rohstoffeinsparenden Recyclingkonzept hergestellt sind.

6. Verbundelement nach einem der Ansprüche 2 bis 5, dadurch gekennzeichnet, daß dem Polyurethanhartschaum ein feinkörniger, pulverförmiger Füllstoff (5) beigemischt ist.

7. Verbundelement nach einem der Ansprüche 2 bis 5, dadurch gekennzeichnet, daß dem Polyurethanhartschaum ein faserförmiger Füllstoff (5) beigemischt ist.

8. Verbundelement nach Anspruch 7, dadurch gekennzeichnet, daß der Füllstoff (5) aus Glas- oder Keramikfasern besteht.

9. Verfahren zur Herstellung eines Verbundelementes (1) mit einem Träger (2) als Kern, dessen Oberfläche mindestens einseitig durch eine dekorative Schichtpreßstoffplatte (3,4) gebildet wird, dadurch gekennzeichnet, daß zwei dekorative Schichtpreßstoffplatten (3,4) mittels einer Halterung in definiertem Abstand voneinander parallel und flächendeckend mit ihren Dekorseiten nach außen weisend zueinander angeordnet sind, derart, daß zwischen beiden ein Raum gebildet wird, in den anschließend zur Ausbildung des Trägers (2) eine vorgebbare Menge eines flüssigen aufschäumenden Gemisches eindosiert wird, so daß der Raum vollständig durch den sich bildenden Schaum ausgefüllt wird, und die beiden dekorativen Schichtpreßstoffplatten (3,4) durch die Adhäsions-Kraft des Schaumes mit diesem verbunden werden.

10. Verfahren nach Anspruch 9, dadurch gekennzeichnet, daß die Druckfestigkeit des Trägers (2) durch die Zugabe von anorganischen und/oder organischen Füllstoffen zu dem Schaum vergrößert wird.

0076943

1/3

Fig.1

0076943

Fig.2

Fig. 3

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | B 32 B 5/20 |
| X | US-A-3 630 819 (M.T. CONGER) <br><br> * Patentansprüche 1,2,4; Spalte 1, Zeile 28 - Spalte 3, Zeile 67; Spalte 6, Zeilen 1-11; Beispiele 1,2; Figuren 3,4 * | 1-6,9, 10 | |
| | --- | | |
| X | FR-A-2 064 023 (VER. VOLKSEIG. BETR. FURNIERE UND PLATTEN) <br> * Patentanspruch 1; Seite 1, Zeilen 1-4; Seite 3, Zeile 4 - Seite 4, Zeile 21; Beispiel 2 * | 1-4,7, 9,10 | |
| | --- | | |
| X | DE-A-1 944 222 (PRESSWERK KONGEN) <br> * Patentansprüche 1-8,16; Seiten 3,4,6-8; Beispiel 1; Figuren 1,2 * | 1-3,9 | |
| | ----- | | |

RECHERCHIERTE SACHGEBIETE (Int. Cl. 3)

B 32 B

Der vorliegende Recherchenbericht wurde für alle Patentansprüche erstellt.

| Recherchenort <br> DEN HAAG | Abschlußdatum der Recherche <br> 13-01-1983 | Prüfer <br> BLASBAND I. |
|---|---|---|